# EUROPÄISCHE PATENTSCHRIFT

(11) **EP 2 089 440 B1**
(45) Veröffentlichungstag und Bekanntmachung des Hinweises auf die Patenterteilung: **18.12.2013**
(21) Anmeldenummer: 07821999.5
(22) Anmeldetag: 30.10.2007
(51) Int. Cl.: C08F 20/00

(54) **RADIKALISCH HÄRTBARE ZUSAMMENSETZUNG ENTHALTEND POLYMERISIERBARES MONOMER UND RADIKALBILDNER**
RADICALLY CURABLE COMPOSITION CONTAINING POLYMERIZABLE MONOMER AND RADICAL FORMER
COMPOSITION POUVANT ÊTRE DURCIE PAR VOIE RADICALAIRE, CONTENANT UN MONOMÈRE POLYMÉRISABLE ET DES GÉNÉRATEURS DE RADICAUX

(30) Priorität: 30.10.2006 EP 06123168
(43) Veröffentlichungstag der Anmeldung: 19.08.2009
(73) Patentinhaber: Sika Technology AG, 6340 Baar (CH)
(72) Erfinder: DE COOMAN, Ria, CH-8905 Arni (CH); MAIER, Steffen, CH-5430 Wettingen (CH); GIMMNICH, Peter, 78467 Konstanz (DE)
(74) Vertreter: Sika Patent Attorneys
(86) Internationale Anmeldenummer: PCT/EP2007/061645
(87) Internationale Veröffentlichungsnummer: WO 2008/052978

(56) Entgegenhaltungen:
- DATABASE CA [Online] CHEMICAL ABSTRACTS SERVICE, COLUMBUS, OHIO, US; 30. Juni 2000 (2000-06-30), WANG, ERJIAN ET AL: "Preparation and application of in situ synchronous photopolymerization photochromic imaging material composite" XP002415189 gefunden im STN Database accession no. 133:51179 & CN 1 228 546 CN (INSTITUTE OF PHOTOGRAPHIC CHEMISTRY, CHINESE ACADEMY OF SCIENCES, PEOP) Januar 1998 (1998-01)
- DATABASE BEILSTEIN BRN 7018841 11. Mai 1995 (1995-05-11), XP002415190
- DATABASE BEILSTEIN BRN 7019576 11. Mai 1995 (1995-05-11), XP002415191

## Beschreibung

### Technisches Gebiet

Die Erfindung betrifft das Gebiet der radikalisch polymerisierbaren Monomere.

### Stand der Technik

Radikalisch polymeriserbare Monomere, insbesondere α,β-ungesättigte Monomere, sind seit langem bekannt und im Einsatz. Sie werden als Beschichtungen, Klebstoffe und Dichtstoffe seit langem eingesetzt und werden durch Licht, insbesondere durch UV-Licht, oder thermisch gebildete Radikale polymerisiert.

Es gibt eine breite kommerziell erhältliche Palette an derartigen Monomeren, insbesondere von (Meth)acyrlat-Monomeren für die radikalische Polymerisation.

Aufgrund der Anforderungen besteht ein grosser Bedarf an Monomeren, welche einen geringen Eigengeruch aufweisen und nach Aushärtung gute Mechanik und insbesondere eine hohe Glasumwandlungstemperatur, und gute Haftung auf einer breiten Palette an Substraten, insbesondere Kunststoffe aufweisen.

R.F. Talipov offenbart in Russian Journal of Organic Chemistry, Vol. 29, No. 7, 1993, 1205-1207 die Herstellung diverser Hydroxytetrahydrofurylester, unter anderem den Ester der Acrylsäure und Methacrylsäure, und dass 3-Hydroxytetrahydrofuran und dessen Derivate von Interesse als biologische aktive Verbindungen, insbesondere in Bezug auf das AIDS Virus sind.

### Darstellung der Erfindung

Aufgabe der vorliegenden Erfindung ist es daher, radikalisch härtbare Zusammensetzungen zur Verfügung zu stellen, welche einen geringen Eigengeruch aufweisen und nach Aushärtung gute Mechanik und insbesondere eine hohe Glasumwandlungstemperatur, und gute Haftung auf einer breiten Palette an Substraten, insbesondere Kunststoffe aufweisen.

Überraschenderweise wurde nun gefunden, dass Zusammensetzungen gemäss Anspruch 1, welche spezifische Ester von 3-Hydroxytetrahydrofuran enthalten, diese Aufgabe lösen.

Diese Zusammensetzungen weisen vor und nach Aushärtung einen sehr geringen Geruch auf, und verfügen nach der Aushärtung über exzellente mechanische Eigenschaft gepaart mit eine guten Haftung, insbesondere auf Kunststoffen.

Diese Zusammensetzungen sind insbesondere einsetzbar als Kleb- oder Dichtstoffe oder als Beschichtung und können thermisch oder mittels elektromagnetischer Strahlung polymerisiert werden.

Schliesslich betrifft die Erfindung auch die Verwendung des spezifischen Ester von 3-Hydroxytetrahydrofuran der Formel (I) als Monomer für Anwendungen, insbesondere als Klebstoff, welche nach der Aushärtung des Monomers eine Arbeitstemperatur von höher als 60°C, insbesondere von höher als 80°C, aufweisen.

Aufgrund des geringen Eigengeruchs dieses Monomers ist er insbesondere geeignet, dass er gemäss Anspruch 15 für Anwendungen in geschlossenen oder schlecht belüftbaren Innenräumen verwendet wird.

### Wege zur Ausführung der Erfindung

Die vorliegende Erfindung betrifft eine ein- oder mehrkomponentige radikalisch härtbare Zusammensetzung, welche mindestens ein radikalisch polymerisierbares Monomer der Formel (I) und mindestens einen Radikalbildner enthält. 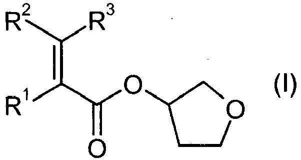 Hierbei steht R¹ für H, CH₃, CH₂-CH₃ oder CH₂COOR⁴.
R² steht für H, CH₃, CH₂-CH₃, Phenyl, CH=CH-CH₃, COOR⁴ oder CH₂COOR⁴.
R³ steht für H, CH₃, COOR⁴ oder CH₂COOR⁴.
Schliesslich steht R⁴ für H, Alkyl, Cycloalkyl, Phenyl oder für

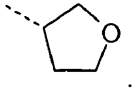

Wenn R⁴ für eine Alkylgruppe steht, sind hierfür insbesondere Methyl, Ethyl, n-Propyl, iso-Propyl, n-Butyl, sek.-Butyl und tert.-Butyl sowie n-Butyl bevorzugt.

Das radikalisch polymerisierbare Monomer der Formel (I) lässt sich durch Veresterung von 3-Hydroxy-Tetrahydrofuran und der entsprechenden Carbonsäure herstellen.

Beispiele für geeignete derartige Carbonsäuren sind Methacrylsäure, Acrylsäure, Crotonsäure, Itaconsäure, Tiglinsäure, trans-2-Pentensäure, Zimtsäure, Seneciosäure, Sorbinsäure, Fumarsäure, Maleinsäure, Mesaconsäure, Glutaconsäure und Citraconsäure. Weiterhin sind teilveresterte Di- oder Polycarbonsäuren, bei denen nicht alle Carbonsäuregruppen mit 3-Hydroxy-Tetrahydrofuran verestert sind, geeignet.

Das radikalisch polymerisierbare Monomer der Formel (I) lässt sich auch durch Reaktion von 3-Hydroxy-Tetrahydrofuran mit dem entsprechenden Säurehalogenid oder Säureanhydrides herstellen. Besonders geeignet sind die Säurehalogenide oder Säureanhydride der oben aufgeführten Carbonsäuren.

Eine sehr bevorzugte weitere Möglichkeit der Herstellung des radikalisch polymerisierbaren Monomers der Formel (I) besteht in der Umesterung eines Esters der Formel (II)

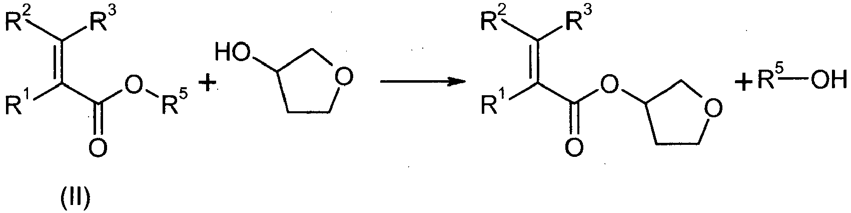

R⁵ steht hierbei für einen C₁-C₆ Alkylrest, insbesondere für Methyl oder Ethyl. Die Umesterung erfolgt unter dem Einfluss eines Katalysators, insbesondere eines Titanates.

Teilweise veresterte Monomere der Formel (I) lassen sich auf einfache Art und Weise aus Anhydriden einer Dicarbonsäure mit 3-Hydroxy-Tetrahydrofuran herstellen. Als Beispiel hierfür ist das untenstehende teilveresterte Monomere der Formel (I'), welches sich aus der Reaktion mit Maleinsäureanhydrid hergestellt werden kann.

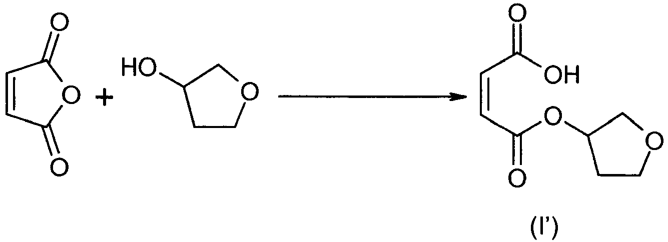

Diese teilveresterten Monomere lassen sich mit weiteren Alkoholen weiter verestern. Je nach verwendetem Alkohol können Diester mit zwei^{t} unterschiedlichen Esterketten hergestellt werden.

In einer bevorzugten Ausführungsform sind R² = R³ = H und R¹ = H oder CH₃. Es ist insbesondere CH₃ bevorzugt. Demzufolge handelt es sich beim radikalisch polymerisierbaren Monomer der Formel (I) insbesondere um einen Ester der (Meth)acrylsäure, bevorzugt der Methacrylsäure.

Das für die Herstellung des radikalisch polymerisierbaren Monomers der Formel (I) einsetzbare 3-Hydroxy-Tetrahydrofuran ist kommerziell zum Beispiel bei ABCR GmbH & Co., Deutschland, Acros Organics, oder bei Chemos GmbH, Deutschland erhältlich.

Es gibt mehrere Möglichkeiten das 3-Hydroxy-Tetrahydrofuran herzustellen, beispielsweise aus 1,2,4-Butantriol, wie es z.B. von Daniele Marton et al., Tetrahydron, Vol. 45, No. 22, 1989, 7099 - 7108 offenbart wird.

Das radikalisch polymerisierbare Monomer der Formel (I) zeichnet sich insbesondere durch einen geringen Eigengeruch aus, so dass auch die ein- oder mehrkomponentige radikalisch härtbare Zusammensetzung mit geringem Eigengeruch formuliert werden kann. Aufgrund des geringen Eigengeruches eignen sich die Monomere der Formel (I) insbesondere für Anwendungen in geschlossenen schlecht belüftbaren Innenräumen. Dies ist besonders wichtig für die Anwendungen als Fussbodenbelag oder Photolack.

Weiterhin weisen die Zusammensetzungen mit dem Monomer der Formel (I) nach Aushärtung eine besonders hohe Glasübergangstemperatur auf. Deshalb eignet sich das Monomer der Formel(I) besonders gut für Anwendungen, insbesondere als Klebstoff, welche nach der Aushärtung des Monomers eine Arbeitstemperatur von höher als 60°C, insbesondere von höher als 80°C, aufweisen.

Die Monomere der Formel (I) weisen die grossen Vorteile auf, dass sie synthetisch sehr gut und einfach zugänglich sind und ausgezeichnete Hydrolysestabiltät sowohl vor als auch nach der Polymerisation besitzen. Nach der Polymerisation neigen sie zudem auch nicht zur Versprödung oder weitergehenden Vernetzungsreaktionen, wie sie unter dem Einfluss von Radikalen bei gewissen anderen Monomeren nach Vernetzung erfolgen können.

Der Anteil des radikalisch polymerisierbaren Monomers der Formel (I) an der ein- oder mehrkomponentigen radikalisch härtbaren Zusammensetzung beträgt vorzugsweise zwischen 10 und 99 Gew.-%, insbesondere zwischen 30 und 95 Gew.-%.

Die ein- oder mehrkomponentige radikalisch härtbare Zusammensetzung enthält mindestens einen Radikalbildner. Als Radikalbildner sind insbesondere Moleküle, welche unter Einfluss von Wärme oder von elektromagnetischer Strahlung Radikale bilden, welche dann zur Polymerisation der radikalisch polymerisierbaren Monomeren der Formel (I) führen.

Als thermisch aktivierbare Radikalbildner sind insbesondere solche bevorzugt, welche bei Raumtemperatur noch genügend stabil sind, bei leicht erhöhter Temperatur aber bereits Radikal bilden. Insbesondere ist der Radikalbildner ein Peroxid, ein Perester oder Hydroperoxid. Bevorzugt werden organische Peroxide. Meist bevorzugt ist der Radikalbildner Dibenzoylperoxid.

Als Photoinitiator werden Radikalbildner bezeichnet, welche unter dem Einfluss von elektromagnetischer Strahlung Radikale bilden. Insbesondere ist er ein Photoinitiator, welcher bei einer Bestrahlung mit einer elektromagnetischen Strahlung der Wellenlänge von 230 nm bis 400 nm Radikale bildet. Weiterhin ist er bevorzugt flüssig bei Raumtemperatur.

Besonders bevorzugt ist der Photoinitiator ausgewählt aus der Gruppe bestehend aus α-Hydroxyketonen, Phenylglyoxylaten, Monoacylphosphinen, Diacylphosphinen, Phosphinoxiden und Mischungen davon, insbesondere aus der Gruppe bestehend aus 1-Hydroxy-cyclohexyl-phenyl-keton, Benzophenon, 2-Hydroxy-2-methyl-1-phenyl-propanon, Methyl-Phenyl-Glycoxylat, Oxyphenyl-essigsäure 2-[2-oxo-2-phenyl-acetoxy-ethoxy]ethylester, Oxy-phenylessigsäure 2-[2-hydoxy-ethoxy]ethyl ester, Diphenyl(2,4,6-trimethylbenzoyl)phosphinoxid, Phenylbis(2,4,6-trimethylbenzoyl)phosphinoxid und Mischungen davon. Derartige Phototinitiatoren sind kommerziell erhältlich zum Beispiel aus der Produktelinie IRGACURE und DAROCUR von Ciba Speciality Chemicals.

Es hat sich gezeigt, dass Mischungen von Photoinitiatoren, insbesondere die Kombination eines Bisacylphosphinoxides und eines α-Hydroxyketones sich besonders gut eignen. Als meist bevorzugte Photoinitiatoren sind eine Mischung von Phenylbis(2,4,6-trimethylbenzoyl)phosphinoxid und 2-Hydroxy-2-methyl-1-phenyl-propanon.

Im Falle, wo der Radikalbildner ein Peroxid, ein Perester oder Hydroperoxid ist, ist es vorteilhaft, dass die Zusammensetzung weiterhin mindestens ein tertiäres Amin oder Übergangsmetallsalz oder Übergangsmetallkomplex als Katalysator enthält. Die Anwesenheit dieser Katalysator bewirkt, dass die Radikale bereits bei tieferer Temperatur, insbesondere bei Raumtemperatur, gebildet werden. Geeignete tertiäre Amine sind beispielsweise N,N-Dimethylanilin, N,N-Dimethyl-p-Toluidin, N,N-Diethylanilin, N,N-Diethyltoluidin, N,N-bis(2-hydroxyethyl)-p-Toluidin, N-ethoxylierte p-Toluidine, N-Alkylmorpholine oder Mischungen davon. Besonders geeignete Übergangsmetallsalze oder Übergangsmetallkomplexe sind insbesondere diejenigen der Metalle Cobalt, Mangan, Vanadium und Kupfer.

Als Katalysator werden tertiäre Amine bevorzugt.

Der Anteil des Katalysators an der ein- oder mehrkomponentigen radikalisch härtbaren Zusammensetzung beträgt vorzugsweise zwischen 0.01 und 10 Gew.-%, insbesondere zwischen 0.1 und 5 Gew.-%.

Der Anteil des Radikalbildners an der ein- oder mehrkomponentigen radikalisch härtbaren Zusammensetzung beträgt vorzugsweise zwischen 0.01 und 15 Gew.-%, insbesondere zwischen 0.5 und 10 Gew.-%.

Die Zusammensetzung enthält vorteilhaft mindestens ein weiteres radikalisch polymerisierbares Monomer **M.** Dieses Monomer **M** ist insbesondere ausgewählt aus der Gruppe bestehend aus α,β-ungesättigten Carbonsäuren, Ester von α,β-ungesättigten Carbonsäuren, Amide von α,β-ungesättigten Carbonsäuren, Anhydride von α,β-ungesättigten Carbonsäuren; α,β-ungesättigten Dicarbonsäuren, Ester von α,β-ungesättigten Dicarbonsäuren, Amide von α,β-ungesättigten Dicarbonsäuren, Anhydride von α,β-ungesättigten Dicarbonsäuren; Vinylalkoholen oder Allylalkoholen; Vinylcarbonsäureestern, Allylcarbonsäureestern, Acrylonitril und Styrol.

Insbesondere handelt es sich beim Monomer **M** um (Meth)acrylsäure oder um einen (Meth)acrylsäureester, bevorzugt um einen Methacrylsäureester.

Meist bevorzugt ist das weitere radikalisch polymerisierbare Monomer **M** ausgewählt aus der Gruppe bestehend aus 2-Hydroxyethylmethacrylat (HEMA), Hydroxypropylmethacrylat (HPMA), Trimethylcyclohexylmethacrylat (TMCHMA), Cyclohexylmethacrylat (CHMA), Isobornylmethacrylat (IBMA), Tetrahydrofurfurylmethacrylat (THFMA). Besonders bevorzugt ist Tetrahydrofurfurylmethacrylat (THFMA).

Der Einsatz mindestens eines weiteren radikalisch polymerisierbaren Monomeren **M** in der Zusammensetzung kann vorteilhaft sein, da dadurch die Eigenschaften, insbesondere die mechanischen Eigenschaften, einfach variiert werden können. Zudem kann eine derartige Abmischung auch aus Kostengründen vorteilhaft sein. Hierbei sollte jedoch darauf geachtet werden, dass die positiven Eigenschaften durch eine derartige Abmischung nicht allzu stark verschlechtert werden. Deshalb sind insbesondere als weitere Monomere **M** solche bevorzugt, welche keinen oder nur einen geringem Eigengeruch vor und nach Aushärtung aufweisen.

Der Anteil des gegebenenfalls vorhandenen weiteren radikalisch polymerisierbaren Monomers **M** an der ein- oder mehrkomponentigen radikalisch härtbaren Zusammensetzung beträgt vorzugsweise zwischen 10 und 60 Gew.-%, insbesondere zwischen 10 und 40 Gew.-%.

Die Zusammensetzung enthält vorteilhaft weiterhin mindestens ein Metall(meth)acrylat. Als Metall(meth)acrylat sind insbesondere Metall(meth)-acrylate von Ca(II), Mg(II) oder Zn(II) geeignet, welche Hydroxy und/oder (Meth)acrylsäure oder (Meth)acrylat als Ligand oder Anion aufweisen.

Besonders bevorzugt sind Zink-(Meth)acrylat, Calcium-(Meth)acrylat, Zn(OH)(Meth)acrylat und Magnesium-(Meth)acrylat.

Der Anteil des gegebenenfalls vorhandenen Metall(meth)acrylates beträgt vorzugsweise zwischen 0.1 und 20 Gew.-%, insbesondere zwischen 0.5 und 10 Gew.-%.

Die Zusammensetzung kann weitere zusätzliche Bestandteile aufweisen. Derartige zusätzliche Bestandteile sind Core-Shell-Polymere, Flüssigkautschuke, organische und anorganische Füllstoffe, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropiermittel und weitere dem Fachmann bekannte gängige Rohstoffe und Additive.

Füllstoffe werden in der Zusammensetzung vorzugsweise in einer Menge von 10 - 60 Gew.-% eingesetzt.

Als Polymerisationsinhibitoren sind insbesondere Hydrochinone, insbesondere Hydrochinon und Methylhydrochinone, oder t-butyl-p-Cresol geeignet.

Besonders geeignete zusätzliche Bestandteile sind neben Katalysatoren insbesondere Core-Shell-Polymere und Flüssigkautschuke.

Core-Shell-Polymer bestehen aus einem elastischen Kernpolymer und einem starren Schalen-Polymer. Insbesondere geeignete Core-Shell-Polymere bestehen aus einem Kern (Core) aus vernetztem elastischem Acrylat- oder Butadien-Polymer, welche auf eine starre Schale (Shell) eines starren thermoplastischen Polymers aufgepropft ist.

Besonders geeignete Core-Shell-Polymere sind diejenigen, welche im organischen (Meth)acrylat aufquellen, aber sich nicht lösen.

Bevorzugte Core-Shell-Polymere sind sogenannte MBS Polymere, welche kommerziell unter dem Handelsnamen Clearstrength™ von Atofina oder Paraloid™ von Rohm and Haas erhältlich sind. Die Core-Shell-Polymere werden bevorzugt in einer Menge von 5 bis 40 Gewichts-%, insbesondere von 5 - 25 Gew.-%, bezogen auf die Zusammensetzung eingesetzt.

Als Flüssigkautschuke sind insbesondere Butadien/Acrylonitril-Copolymer basierende Flüssigkautschuke oder Polyurethan-basierende Flüssigkautschuke geeignet. Die Flüssigkautschuke weisen bevorzugt ungesättigte Doppelbindungen auf.

Als besonders geeignete Flüssigkautschuke haben sich einerseits vinylterminierte Butadien/Acrylnitril-Copolymere, wie sie unter der Produkte-Reihe Hycar^{®} VTBNX von BFGoodrich^{®}, beziehungsweise von Noveon kommerziell angeboten werden.

Andererseits als besonders geeignete Flüssigkautschuke gelten (Meth)acrylat-terminierte Polyurethanpolymere. Derartige Polymere können aus Polyolen und Polyisocyanaten unter Bildung von Isocyanat-funktionellen Polyurethanprepolymeren und anschliessender Umsetzung mit Hydroxyalkyl(meth)acrylaten hergestellt werden.

Bevorzugte Isocyanat-funktionelle Polyurethanprepolymere sind das Reaktionsprodukt eines Polyisocyanates, insbesondere eines Diisocyanates und eines Polyols im Verhältnis Isocyanat-Gruppen-Equivalente zu Hydroxyl-Gruppen-Equivalente von grösser als 1. Somit sind auch Addukte vom Typ OCN-xx-NHCO-O-yy-O-CONH-xx-NCO auch als Polyurethane Prepolymer in diesem Zusammenhang zu verstehen, wobei xx für ein Diisocyanat ohne NCO Gruppen und yy für ein Diol ohne OH Gruppen stehen.

Grundsätzlich kann hierfür jedes Polyol HO-R-(OH)q mit q ≥ 1 verwendet werden, wobei R für ein Polymergerüst mit Heteroatomen im Gerüst oder als Seitenketten steht.

Bevorzugte Polyole sind Polyole, welche ausgewählt sind aus der Gruppe bestehend aus Polyoxyalkylenpolyole, auch "Polyetherpolyole" genannt, Polyesterpolyole, Polycarbonatpolyole und deren Mischungen. Bevorzugte Polyole sind Diole. Die meist bevorzugten Diole sind Polyoxyethylendiole oder Polyoxypropylendiole oder Polyoxybutylendiole .

Die Polyoxyalkylenpolyole können einen niedrigen Ungesättigtheitsgrad (gemessen nach ASTM D-2849-69 und angegeben in Milliequivalent Ungesättigtheit pro Gramm Polyol (mEq/g)) -hergestellt beispielsweise mit Hilfe von sogenannten Double Metal Cyanide Complex-Katalysatoren (DMC-Katalysatoren) - oder auch einen höheren Ungesättigtheitsgrad -hergestellt beispielsweise mit Hilfe von anionischen Katalysatoren wie NaOH, KOH, CsOH oder Alkalialkoholaten- aufweisen.

Die Verwendung von Polyoxyalkylenpolyolen mit tiefem Ungesättigtheitsgrad, insbesondere von weniger als 0.01 mEq/g, wird für Polyole mit einem Molekulargewicht von ≥ 2000 bevorzugt.

Grundsätzlich können jegliche Polyisocyanate mit zwei oder mehr Isocyanatgruppen verwendet werden.

Beispielsweise seien erwähnt 2,4- and 2,6-Toluylenediisocyanat (TDI) und deren Mischungen, 4,4'-Diphenylmethandiisocyanat (MDI), jegliche Isomeren von Diphenylmethandiisocyanat, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- and 2,4,4-Trimethyl-1,6-hexamethylendiisocyanat (TMDI), 1,12-Dodecamethylendiisocyanat, Cyclohexan-1,3- und -1,4-diisocyanat und jegliche Mischungen dieser Isomeren miteinander, 1-Isocyanato-3,3,5-trimethyl-5-isocyanatomethyl-cyclohexan (=Isophorondiisocyanat oder IPDI), Perhydro-2,4'- and -4,4'-diphenylmethandiisocyanat (HMDI), 1,4-Diisocyanato-2,2,6-trimethylcyclohexan (TMCDI), mund p-Xylylenediisocyanat (XDI), 1,3- and 1,4-Tetramethylxylylenediisocyanat (TMXDI), 1,3- and 1,4-Bis-(isocyanatomethyl)-cyclohexan, jegliche Oligomere oder Polymere der oben genannten Isocyanate sowie jegliche Mischungen der genannten Isocyanate untereinander. Bevorzugte Polyisocyanate sind MDI, TDI, HDI, IPDI und deren Mischungen untereinander. Meist bevorzugt sind IPDI und HDI und deren Mischung.

Die aus den Polyolen und Polyisocyanaten hergestellten Isocyanatterminierten Prepolymeren werden mit (Meth)acrylsäureestern, welche Hydroxylgruppen aufweisen, umgesetzt. Bevorzugte (Meth)acrylsäureestern, welche Hydroxylgruppen aufweisen, sind Hydroxyethyl(meth)acrylat oder Hydroxypropyl(meth)acrylat. Die zwei Reaktanden werden in an und für sich bekannter Art und Weise miteinander reagiert, typischerweise in einem stöchiometrischen Überschuss des (Meth)acrylsäureesters, welcher Hydroxylgruppen aufweist.

Das bevorzugte (Meth)acrylat-terminierte Polyurethanpolymer ist das Reaktionsprodukt eines IPDI/Polypropylenglycol-Polyurethanprepolymers oder eines HDI/Polypropylenglycol-Polyurethanprepolymers mit Hydroxyethyl(meth)-acrylat oder mit Hydroxypropyl(meth)acrylat.

Die Flüssigkautschuke werden bevorzugt in einer Menge von 5 bis 40 Gewichts-% bezogen auf die Zusammensetzung eingesetzt.

In einer bevorzugten Ausführungsform enthält die ein- oder mehrkomponentige radikalisch härtbare Zusammensetzung
- mindestens ein radikalisch polymerisierbares Monomer der Formel (I), insbesondere in einer Menge von 20 - 50 Gew.-%
- mindestens ein Radikalbildner, insbesondere ein Peroxid, insbesondere in einer Menge von 0.1 - 10 Gew.-%
- mindestens ein Katalysator, insbesondere in einer Menge von 0.1 - 5 Gew.-%
- mindestens ein Füllstoff, insbesondere in einer Menge von 10 - 60 Gew.-%
- gegebenenfalls mindestens ein weiteres radikalisch polymerisierbares Monomer **M,** insbesondere in einer Menge von 10 - 40 Gew.-%
- gegebenenfalls mindestens ein Metall(meth)acrylat, insbesondere in einer Menge von 0.5 - 10 Gew.-%
- gegebenenfalls mindestens ein Core-Shell-Polymer, insbesondere in einer Menge von 5 - 25 Gew.-%.

Die ein- oder mehrkomponentige radikalisch härtbare Zusammensetzung kann einkomponentig sein, das heisst sie besteht aus einer Komponente.

Eine derartige einkomponentige Zusammensetzung polymerisiert unter Einfluss einer bei Bedarf einwirkenden Energie zu einem Polymer. Die Zusammensetzung ist bei Abwesenheit oder Abschirmung gegenüber einer derartigen Energiequelle lagerstabil, beziehungsweise zumindest bedingt lagerstabil. Die bei Bedarf einwirkende Energie kann elektromagnetische Strahlung oder Hitze sein. Diese Einwirkung kann kontinuierlich oder schlagartig, zum Beispiel in Form eines Blitzes oder Pulses, erfolgen.

Dies kann einerseits über einen Puls grosser Hitze erfolgen, zum Beispiel über eine Flamme oder erhitztes Gas oder ein erhitztes Metall. Die Quelle einer elektromagnetischen Strahlung kann verschieden sein. Insbesondere handelt es sich hier um Sonnenlicht oder um eine künstliche Lichtquelle wie Laser, UV-Lampe, IR- oder Mikrowellenquellen. Bevorzugt sind Quellen, welche eine Strahlung erzeugen, welche im Wellenbereich von 230 nm bis 400 nm liegen. Insbesondere bevorzugt sind UV-Laser und Quecksilber- oder Xenon- Mittel- oder Hochdrucklampen, wie sie für die UV-Härtung angewendet werden.

Eine Abschirmung gegenüber einer derartigen Energiequelle kann über eine Lagerung an einem dunklen Ort oder in einer Lichtdichten Verpackung, beispielsweise in einem Aluminiumgebinde, oder an einem gekühlten Ort, beispielsweise im Kühlschrank oder Gefrierschrank, erfolgen.

Einkomponentige Zusammensetzungen sind insbesondere vorteilhaft für den Fall, in dem der Radikalbildner ein Photoinitiator ist. Derartige Zusammensetzungen sind vorteilhaft bei Raumtemperatur in der Abwesenheit von Licht lagerfähig und werden insbesondere mittels Lichtquelle gehärtet.

Einkomponentige Zusammensetzungen lassen sich insbesondere als Photolack einsetzen.

Die ein- oder mehrkomponentige radikalisch härtbare Zusammensetzung kann zweikomponentig sein, welche aus einer ersten Komponente **K1** und einer zweiten Komponente **K2** besteht. Hierbei enthält die erste Komponente **K1** mindestens das radikalisch polymerisierbare Monomer der Formel (I) und gegebenenfalls das tertiäre Amin oder das Übergangsmetallsalz oder das Übergangsmetallkomplex als Katalysator und die zweite Komponente **K2** enthält mindestens das Peroxid, den Perester oder das Hydroperoxid als Radikalbildner.

In einer Ausführungsform enthält die erste Komponente **K1** mindestens das radikalisch polymerisierbare Monomer der Formel (I) und mindestens das Peroxid, den Perester oder das Hydroperoxid als Radikalbildner und die zweite Komponente **K2** enthält ein das tertiäre Amin oder das Übergangsmetallsalz oder das Übergangsmetallkomplex als Katalysator. Diese Ausführungsform ist insbesondere dann vorteilhaft, wenn die nach der Polymerisation ausgehärtete Zusammensetzung geringe Schichtdicken aufweisen soll.

Bei Bedarf werden die zwei Komponenten zusammengemischt und polymerisieren. Die zwei Komponenten sind getrennt von einander lagerstabil beziehungsweise bedingt lagerstabil. Es ist vorteilhaft, wenn die zwei Komponenten nicht gekühlt gelagert werden müssen.

Die Vermischung kann manuell mittels eines Mischmittels, wie einem Spatel, oder über einen statischen oder dynamischen Mischer erfolgen.

Die ein- oder mehrkomponentige radikalisch härtbare Zusammensetzung kann sehr vielfältig eingesetzt werden. Insbesondere kann sie als Beschichtung, Dichtstoff oder Klebstoff verwendet werden. Weiterhin können die Zusammensetzungen zur Herstellung von Formteilen, wie beispielsweise optische Linsen verwendet werden.

Als Beschichtung sind insbesondere Lacke oder Beläge zu nennen. Ein besonders wichtiges Einsatzgebiet sind Photolacke zu nennen, wie sie beispielsweise für das Lackieren von Metallen oder Kunststoffen oder für das Beschichten von Papier oder Kunststoffen verwendet werden. Als Belag sind insbesondere Bodenbeläge zu nennen.

Eine weitere bevorzugte Anwendung als Beschichtung sind sogenannte Primer. Ein Primer ist eine Beschichtung auf einem Substrat, wobei auf den Primer ein weiteres Material appliziert wird, und weist eine Haftvermittlerfunktion auf.

Bei der Beschichtung kommt insbesondere ein Verfahren zum Einsatz, welches die folgenden Schritte umfasst:
i') Applizieren einer der vorgängig beschriebenen ein- oder mehrkomponentigen radikalisch härtbaren Zusammensetzung auf ein Substrat **S1**
ii') Aushärtung der ein- oder mehrkomponentigen radikalisch härtbaren Zusammensetzung.

Vorzugsweise schliesst sich an den Schritt i') ein Schritt i") des Bestrahlens der Zusammensetzung mit einer elektromagnetischen Strahlung an. Die Möglichkeiten und bevorzugte Ausführungsformen vom Substrat **S1** entsprechen denjenigen, welche beim nachfolgend beschriebenen Verfahren der Verklebung erwähnt werden.

Aus diesem Verfahren resultiert ein beschichteter Artikel.

Besonders bevorzugt wird die ein- oder mehrkomponentige radikalisch härtbare Zusammensetzung, insbesondere in Form einer zweikomponentigen Zusammensetzung, als Kleb- oder Dichtstoff verwendet.

Bei der Verklebung von zwei Substraten **S1** und **S2** kommt insbesondere ein Verfahren zum Einsatz, welches die folgenden Schritte umfasst:
i) Applizieren einer vorgängig beschriebenen ein- oder mehrkomponentigen radikalisch härtbaren Zusammensetzung auf ein Substrat **S1;**
ii) Kontaktieren der applizierten Zusammensetzung mit einem zweiten Substrat **S2** innerhalb der Offenzeit;
   oder
   ia) Applizieren einer vorgängig beschriebenen ein- oder mehrkomponentigen radikalisch härtbaren Zusammensetzung auf ein Substrat **S1;**
   ib) Applizieren einer vorgängig beschriebenen ein- oder mehrkomponentigen radikalisch härtbaren Zusammensetzung auf ein Substrat **S2;**
   iia)Fügen der beiden mit Zusammensetzung applizierten Substrate **S1** und **S2** innerhalb der Offenzeit;
wobei das zweite Substrat **S2** aus dem gleichen oder einem unterschiedlichen Material wie das Substrat **S1** besteht; und
wobei vor dem Schritt i), bzw. ia) und ib), im Falle einer mehrkomponentigen Zusammensetzung ein Schritt I) des mindestens partiellen Mischens der mehreren Komponenten erfolgt.

Das Substrat **S1** und/oder **S2** können vielfältiger Art sein. Es hat sich jedoch gezeigt, dass die Zusammensetzungen insbesondere sogar auf Kunststoffen eine ausgezeichnete Haftung aufweisen. Bevorzugt ist deshalb mindestens eines der Substrates **S1** oder **S2** ein Kunststoff, insbesondere ein Kunststoff ausgewählt aus der Gruppe bestehend aus PVC, ABS, Polycarbonat, Poly(methyl(meth)acrylat) (PMMA), Polyester, Polyamid, modifiziertes Polyethylen oder Polypropylen, wie Luft- oder NiederdruckPlasma-vorbehandeltes Polyethylen oder Polypropylen; Polystyrol und Copolymer des Styrols, wie ASA, SAN.

Weiterhin kann das Substrat ein Faserwerkstoff, insbesondere Papier oder Karton, insbesondere bedrucktes Papier; oder ein metallischer Werkstoff, insbesondere Aluminium, Eisen, Kupfer oder deren Legierungen, wie zum Beispiel Stahl; oder eine Computerplatine oder eine bedruckte Schaltung, oder ein mineralisches Substrat, insbesondere Glas, Glaskeramik, Beton oder Mauerwerk, sein.

Das Substrat kann eine Folie oder ein dickschichtiger Körper sein.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus diesem Verfahren resultiert ein verklebter Artikel. Derartige Artikel stellen vorzugsweise ein Transportmittel, insbesondere ein Automobil, Bus, Lastkraftwagen, Schienenfahrzeug, ein Schiff oder ein Luftfahrzeug, oder industriell gefertigte Artikel oder Innneneinrichtungsgegenstände dar.

Die beschriebene ein- oder mehrkomponentige Zusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung.

Beispiele hierfür sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen sowie An- oder Einbaumodule hierfür.

Ein weiterer Aspekt der Erfindung betrifft eine gehärtete Zusammensetzung, welche aus einer der vorgängig beschriebenen ein- oder mehrkomponentigen radikalisch härtbare Zusammensetzung durch einen Härtungsprozess erhalten wird.

### Beispiele

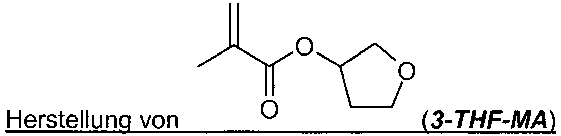

10 g 3-Hydroxy-Tetrahydrofuran und 22,7 g Methacrylsäuremethylester wurden vorgelegt. Zu dieser Mischung wurde Tetra-n-butyltitanat als Katalysator zugegeben und das Reaktionsgemisch auf 90 °C erhitzt. Über eine 20 cm Vigreuxkolonne wurde das entstehende Methanol abdestilliert. Die Mischung wurde für 4h auf 150 °C erhitzt und anschliessend aufgearbeitet.

Dafür wurde der Ansatz mit 200 ml Wasser versetzt und die organische Phase abgetrennt. Die wässrige Phase wurde zweimal mit Hexan extrahiert. Danach trocknete man die organische Phase mit MgSO₄ und engte sie nach der Filtration ein. Es wurden 16,51 g Rohprodukt 3-HydroxyTHFMA gewonnen.

Nach Destillation am Hochvakuum (0,06 bar; 50 °C) wurde eine Ausbeute von 13.6 g am 3-Hydroxy-Tetrahydrofuryl-Methacrylsäureester ("*3-THF-MA*") erzielt (76 % d. Th).

IR-Spektrum (ATR, Perkin Elmer ATR-FTIR)[cm⁻¹]: 2957 (m), 2983 (m), 2866 (m), 1714 (s), 1636 (m), 1451 (m), 1381 (w), 1354 (w), 1315 (m), 1295 (s), 1159 (s), 1110 (m), 1082(s), 1010 (m), 976 (m), 940 (m), 911 (m), 815 (m), 732 (w), 653 (w). (w=schwach,weak, m=mittel, mean, s=stark, strong)

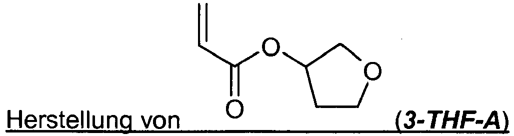

Die Herstellung und Reinigung erfolgt in zu *3-THF-MA* analoger Art und Weise, wobei anstelle des Methacrylsäuremethylester stöchiometrisch ersetzt Acrylsäuremethylester eingesetzt wird. Es wird so 3-Hydroxy-Tetrahydrofuryl-Acrylsäureester (*"3-THF-A"*) erhalten.

IR-Spektrum (ATR, Perkin Elmer ATR-FTIR) [cm⁻¹]: 2985 (m), 2867 (m), 1719 (s), 1635 (m), 1619 (m), 1440 (m), 1408 (s), 1352 (w), 1296 (s), 1272 (s), 1186 (s), 1110 (m), 1081(s), 1047 (s), 971 (s), 910 (m), 862 (w), 810 (m), 740 (w), 662 (w). (w=schwach,weak, m=mittel, mean, s=stark, strong)

### Beispielhafte Zusammensetzungen als Photolack

Es wurden die Zusammensetzungen gemäss Angaben der Tabelle 1 hergestellt. Die Zusammensetzungen wurden auf eine Glasplatte (Floatglass, Rocholl Deutschland, Zinnseite nach unten) mittels Rundrakel (schwarz (4)) in einer Schichtdicke von 40 µm appliziert und einem UV-Strahler (Dr. Hönle Uvaprint 100 CV2, 200 W/cm², Gallium-dotierte Hg-Lampe, Maxima bei 300nm/ 420 nm) während 30 Sekunden bestrahlt. Der so gehärtete Film wurde unmittelbar danach mit einem Finger auf Klebrigkeit hin beurteilt. Diese Beurteilung wurde nach 2 Stunden nach Lagerung bei 23%C/50% rel. Luftfeuchtigkeit wiederholt.

Anschliessend wurde der Film einem Gitterschnitttest nach DIN EN 2409 und einem Fingernageltest unterworfen.

Die Ergebnisse dieser Tests sind in Tabelle 1 zusammengetragen.

**Tabelle 1. Zusammensetzungen als Photolacke.**

| | ***Ref.1*** | ***1*** | ***Ref.2*** | ***2*** |
|---|---|---|---|---|
| ***3-THF-A*** | | 95 Gew.-% | | |
| THFA¹ | 95 Gew.-% | | | |
| ***3-THF-MA*** | | | | 95 Gew.-% |
| THFMA² | | | 95 Gew.-% | |
| IRGACURE 2022³ | 5 Gew.-% | 5 Gew.-% | 5 Gew.-% | 5 Gew.-% |
| | | | | |
| Klebrigkeit(30s) | oberflächentrocken weich, Fingerabdruck sichtbar | oberflächentrocken | klebrig | klebrig |
| Klebrigkeit (2h) | trocken | trocken | trocken | trocken |
| Gitterschnitt | 2 | 0 | 3 | 1 |
| Fingernageltest | ritzbar abrubbelbar | fest gute Haftung | weich keine Haftung | fest gute Haftung |

| | | | | |
|---|---|---|---|---|
| ¹THFA=Tetrahydrofurfurylacrylat ²THFMA=Tetrahydrofurfurylmethacrylat ³IRGACURE 2022, Ciba Specialty Chemicals. | | | | |

### Beispielhafte Zusammensetzungen als Klebstoff

Es wurden zweikomponentige Zusammensetzungen gemäss Tabelle 2 wie folgt hergestellt:
Komponente **K1**: Der Flüssigkautschuk wurde im Monomer gelöst, der Katalysator zugeben und unter Rühren mit dem Core Shell Polymer und dem Füllstoff vermischt und unter Vakuum entlüftet. Die resultierende Paste wurde in die grosse Kammer einer koaxialen Doppelkartusche 1:10 abgefüllt und dicht verschlossen.
Komponente **K2**: Es wurden Dibenzoylperoxid, Weichmacher und Füllstoff innig miteinander vermischt, so dass eine Paste resultiert. Diese wurde in die kleine Kammer einer koaxialen Doppelkartusche 1:10 abgefüllt und dicht verschlossen.

Die so hergestellten 2-Komponeten-Kartuschen wurde bei 23°C/50% rel. Luftfeuchtigkeit gelagert und innert 24 Stunden für die Messungen verwendet.

### Prüfmethoden:

Für die Charakterisierung der mechanischen Eigenschaften und Verklebungen wurden die Zusammensetzungen gemäss Tabelle 2 im Volumenverhältnis 10:1 gemischt.

Die Zugfestigkeit ("TS") wurde nach ISO 527 bei 23°C bestimmt.

Die Bruchdehnung ("BD") wurden nach ISO 527 bei 23°C bestimmt.

Die Zugscherfestigkeit ("ZSF") wurde in Anlehnung an ISO 4587/DIN EN 1465 auf einer Zugmaschine Zwick/Roell Z005 bestimmt (Klebefläche: 12mmx25mm, Schichtdicke: 1.5mm, Messgeschwindigkeit: 10 mm/min, Substrate: Aluminium (100mm x 25mm x 2mm), PVC, ABS, Polycarbonat (PC), Temperatur: 23°C (falls nicht anders genannt), Vorbehandlung: Sika ®ADPrep (Sika Schweiz AG)).

Mit Hilfe eines Torsionspendels wurden nach DIN EN 61006 die Glasübergangstemperatur ("Tg") und nach DIN EN ISO 6721-2 der Speichermodul ("G' ") bestimmt.

Die Ergebnisse sind in Tabelle 2 angegeben.

**Tabelle 2. Zusammensetzungen als Klebstoffe. ¹GT=Gewichtsteile.**

| ***K1*** | ***3*** | ***Ref.3*** | ***Ref.4*** | ***Ref.5*** | ***Ref.6*** | ***Ref. 7*** | ***4*** | ***Ref.8*** |
|---|---|---|---|---|---|---|---|---|
| ***3-THF-MA*** [GT]¹ | 58 | | | | | | 49 | |
| THFMA [GT]¹ | | 58 | | | | | | 49 |
| HEMA [GT]¹ | | | 58 | | | | | |
| CHMA [GT]¹ | | | | 58 | | | | |
| TMCHMA [GT]¹ | | | | | 58 | | | |
| IBMA [GT]¹ | | | | | | 58 | | |
| N,N-Dimethyl-p-toluidin [GT]¹ | 1 | 1 | 1 | 1 | 1 | 1 | 1 | 1 |
| Hycar^{®} VTBNX [GT]¹ | 15 | 15 | 15 | 15 | 15 | 15 | 15 | 15 |
| Core-Shell-Polymer [GT]¹ | 10.5 | 10.5 | 10.5 | 10.5 | 10.5 | 10.5 | 10 | 10 |
| Zinkdi(methacrylate) [GT]¹ | | | | | | | 10 | 10 |
| mineralischer Füllstoff [G1]¹ | 15.5 | 15.5 | 15.5 | 15.5 | 15.5 | 15.5 | 15 | 15 |

| ***K2*** | | | | | | | | |
|---|---|---|---|---|---|---|---|---|
| Dibenzoylperoxid [GT]¹ | 10 | 10 | 10 | 10 | 10 | 10 | 10 | 10 |
| Weichmacher [GT]¹ | 30 | 30 | 30 | 30 | 30 | 30 | 30 | 30 |
| mineralischer Füllstoff [GT]¹ | 60 | 60 | 60 | 60 | 60 | 60 | 60 | 60 |
| | | | | | | | | |
| Geruch | wenig | wenig | kein | intensiv | mittel | stark | wenig | wenig |
| TS [MPa] | 24.4 | 11.9 | 16.8 | 22.7 | 17.1 | 10.2 | 29.4 | 19.4 |
| EB [%] | 12 | 211 | 23 | 7 | 5 | 1 | 5 | 25 |
| Tg [°C] | 80 | 48 | 113 | 71 | 79 | 111 | 98 | 71 |
| G'(80°C)[MPa] | 10 | 1 | 15 | 3 | 5 | 120 | 103 | 14 |
| ZSF (Al, 23°C) [MPa] | 14 | 12 | 17 | 13 | 9 | 8 | 12 | 13 |
| ZSF (Al, 80°C) [MPa] | 7 | 2 | 9 | 7 | 6 | 10 | 9 | 5 |
| ZSF (PVC, 23°C) [MPa] | 8 | 11 | 1 | 3 | 2 | 2 | 4 | 7 |
| ZSF (ABS, 23°C) [MPa] | 6 | 8 | 5 | 1 | 1 | 1 | 5 | 5 |
| ZSF (PC, 23°C) [MPa] | 8 | 10 | 0 | 1 | 1 | 1 | 4 | 5 |

## Patentansprüche

1. Ein- oder mehrkomponentige radikalisch härtbare Zusammensetzung enthaltend
mindestens ein radikalisch polymerisierbares Monomer der Formel (I) 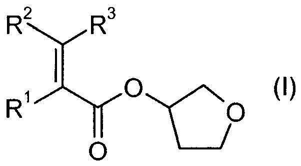 und mindestens ein Radikalbildner,
wobei R¹ für H, CH₃, CH₂-CH₃ oder CH₂COOR⁴ steht;
R² für H, CH₃, CH₂-CH₃, Phenyl, CH=CH-CH₃, COOR⁴ oder CH₂COOR⁴ steht;
R³ für H, CH₃, COOR⁴ oder CH₂COOR⁴ steht
mit R⁴=H, Alkyl, Cycloalkyl, Phenyl oder

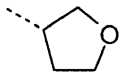

2. Ein- oder mehrkomponentige radikalisch härtbare Zusammensetzung gemäss Anspruch 1, **dadurch gekennzeichnet, dass** R²=R³=H und R¹ = H oder CH₃, insbesondere CH₃ ist.

3. Ein- oder mehrkomponentige radikalisch härtbare Zusammensetzung gemäss einem der vorhergehenden Ansprüche, **dadurch gekennzeichnet, dass** die Zusammensetzung zusätzlich mindestens ein weiteres radikalisch polymerisierbares Monomeren **M** enthält.

4. Ein- oder mehrkomponentige radikalisch härtbare Zusammensetzung gemäss einem der vorhergehenden Ansprüche, **dadurch gekennzeichnet, dass** die Zusammensetzung weiterhin mindestens ein Metall(meth)acrylat enthält.

5. Ein- oder mehrkomponentige radikalisch härtbare Zusammensetzung gemäss einem der vorhergehenden Ansprüche, **dadurch gekennzeichnet, dass** der Radikalbildner ein Peroxid, ein Perester oder Hydroperoxid ist.

6. Ein- oder mehrkomponentige radikalisch härtbare Zusammensetzung gemäss Anspruch 5, **dadurch gekennzeichnet, dass** die radikalisch härtbare Zusammensetzung zweikomponentig ist und aus einer ersten Komponente **K1** und einer zweiten Komponente **K2** besteht,
wobei die erste Komponente **K1** mindestens das radikalisch polymerisierbare Monomer der Formel (I) und gegebenenfalls das tertiäre Amin als Aktivator enthält; und
wobei die zweite Komponente **K2** mindestens das Peroxid, den Perester oder das Hydroperoxid als Radikalbildner enthält;

7. Ein- oder mehrkomponentige radikalisch härtbare Zusammensetzung gemäss einem der Ansprüche 1 bis 4, **dadurch gekennzeichnet, dass** der Radikalbildner ein Photoinitiator ist.

8. Ein- oder mehrkomponentige radikalisch härtbare Zusammensetzung gemäss Anspruch 7, **dadurch gekennzeichnet, dass** der Photoinitiator ausgewählt ist aus der Gruppe bestehend aus α-Hydroxyketonen, Phenylglyoxylaten, Monoacylphosphinen, Diacylphosphinen, Phosphinoxiden und Mischungen davon, insbesondere aus der Gruppe bestehend aus 1-Hydroxy-cyclohexyl-phenyl-keton, Benzophenon, 2-Hydroxy-2-methyl-1-phenyl-propanon, Methyl-Phenyl-Glycoxylat, Oxy-phenyl-essigsäure 2-[2-oxo-2-phenyl-acetoxy-ethoxy]ethylester, Oxy-phenyl-essigsäure 2-[2-hydoxy-ethoxy]ethyl ester, Diphenyl(2,4,6-trimethylbenzoyl)-phosphinoxid, Phenylbis(2,4,6-trimethylbenzoyl)phosphinoxid und Mischungen davon.

9. Ein- oder mehrkomponentige radikalisch härtbare Zusammensetzung gemäss Anspruch 8, **dadurch gekennzeichnet, dass** der Photoinitiator eine Kombination eines Bisacylphosphinoxides und eines α-Hydroxyketones, insbesondere von Phenylbis(2,4,6-trimethylbenzoyl)phosphinoxid und 2-Hydroxy-2-methyl-1-phenyl-propanon, ist.

10. Ein- oder mehrkomponentige radikalisch härtbare Zusammensetzung gemäss einem der vorhergehenden Ansprüche 7 bis 9, **dadurch gekennzeichnet, dass** die radikalisch härtbare Zusammensetzung einkomponentig ist.

11. Verwendung einer ein- oder mehrkomponentigen radikalisch härtbaren Zusammensetzung gemäss einem der Ansprüche 1 bis 10 als Klebstoff oder Dichtstoff.

12. Verwendung einer ein- oder mehrkomponentigen radikalisch härtbaren Zusammensetzung gemäss einem der Ansprüche 1 bis 10 als Beschichtung, insbesondere als Lack, vorzugsweise als Photolack, oder als Bodenbelag.

13. Gehärtete Zusammensetzung, **dadurch gekennzeichnet, dass** sie aus einer ein- oder mehrkomponentigen radikalisch härtbaren Zusammensetzung gemäss einem der Ansprüche 1 bis 10 durch einen Härtungsprozess erhalten wird.

14. Verwendung eines radikalisch polymerisierbaren Monomer der Formel (I), wie er in einer ein- oder mehrkomponentigen radikalisch härtbare Zusammensetzung gemäss einem der Ansprüche 1 bis 10 beschrieben wird,
als Monomer für Anwendungen, insbesondere als Klebstoff, welche nach der Aushärtung des Monomers eine Arbeitstemperatur von höher als 60°C, insbesondere von höher als 80°C, aufweisen.

15. Verwendung eines radikalisch polymerisierbaren Monomer der Formel (I), wie er in einer ein- oder mehrkomponentigen radikalisch härtbare Zusammensetzung gemäss einem der Ansprüche 1 bis 10 beschrieben wird, als Monomer für Anwendungen, insbesondere als Fussbodenbelag oder Photolack, in geschlossenen oder schlecht belüftbaren Innenräumen.

## Claims

1. Single- or multiple-component, free-radically curable composition comprising
at least one free-radically polymerisable monomer of the formula (I) 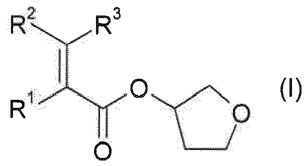 and at least one free-radical initiator,
wherein R¹ is H, CH₃, CH₂-CH₃ or CH₂COOR⁴,
R² is H, CH₃, CH₂-CH₃, phenyl, CH=CH-CH₃, COOR⁴ or CH₂COOR⁴, and
R³ is H, CH₃, COOR⁴ or CH₂COOR⁴
where R⁴ is H, alkyl, cycloalkyl, phenyl or

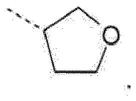

2. Single- or multiple-component, free-radically curable composition according to claim 1, **characterised in that** R²=R³=H and R¹ is H or CH₃, more particularly CH₃.

3. Single- or multiple-component, free-radically curable composition according to any of the preceding claims, **characterised in that** the composition additionally comprises at least one further free-radically polymerisable monomer **M**.

4. Single- or multiple-component, free-radically curable composition according to any of the preceding claims, **characterised in that** the composition further comprises at least one metal (meth)acrylate.

5. Single- or multiple-component, free-radically curable composition according to any of the preceding claims, **characterised in that** the free-radical initiator is a peroxide, a perester or hydroperoxide.

6. Single- or multiple-component, free-radically curable composition according to claim 5, **characterised in that** the free-radically curable composition is a two-component composition and is composed of a first component **K1** and a second component **K2**,
the first component **K1** comprising at least the free-radically polymerisable monomer of the formula (I) and, optionally, the tertiary amine as an activator; and
the second component **K2** comprising at least the peroxide, the perester or the hydroperoxide as a free-radical initiator.

7. Single- or multiple-component, free-radically curable composition according to any of claims 1 to 4, **characterised in that** the free-radical initiator is a photoinitiator.

8. Single- or multiple-component, free-radically curable composition according to claim 7, **characterised in that** the photoinitiator is selected from the group consisting of α-hydroxyketones, phenylglyoxylates, monoacylphosphines, diacylphosphines, phosphine oxides and mixtures thereof, more particularly from the group consisting of 1-hydroxycyclohexyl phenyl ketone, benzophenone, 2-hydroxy-2-methyl-1-phenylpropanone, methyl phenylglycoxylate, 2-[2-oxo-2-phenylacetoxyethoxy]ethyl hydroxyphenyl acetate, 2-[2-hydroxyethoxy]ethyl hydroxyphenyl acetate, diphenyl(2,4,6-trimethylbenzoyl)phosphine oxide, phenylbis(2,4,6-trimethylbenzoyl)phosphine oxide and mixtures thereof.

9. Single- or multiple-component, free-radically curable composition according to claim 8, **characterised in that** the photoinitiator is a combination of a bisacylphosphine oxide and an α-hydroxyketone, more particularly of phenylbis(2,4,6-trimethylbenzoyl)phosphine oxide and 2-hydroxy-2-methyl-1-phenylpropanone.

10. Single- or multiple-component, free-radically curable composition according to any of the preceding claims 7 to 9, **characterised in that** the free-radically curable composition is a one-component composition.

11. Use of a single- or multiple-component, free-radically curable composition according to any of claims 1 to 10 as an adhesive or sealant.

12. Use of a single- or multiple-component, free-radically curable composition according to any of claims 1 to 10 as a coating, more particularly a varnish, preferably a photocurable coating material, or as a floor covering.

13. Cured composition **characterised in that** it is obtained from a single- or multiple-component, free-radically curable composition according to any of claims 1 to 10 by a curing operation.

14. Use of a free-radically polymerisable monomer of the formula (I) as described in a single- or multiple-component, free-radically curable composition according to any of claims 1 to 10 as a monomer for applications, more particularly as an adhesive, which after the curing of the monomer exhibit an operating temperature of higher than 60 °C, more particularly of higher than 80 °C.

15. Use of a free-radically polymerisable monomer of the formula (I) as described in a single- or multiple-component, free-radically curable composition according to any of claims 1 to 10 as a monomer for applications, more particularly as a floor covering or photocurable coating material, in interiors that are closed or difficult to aerate.

## Revendications

1. Composition à un ou plusieurs composants
durcissable par voie radicalaire, contenant au moins un monomère polymérisable par voie
radicalaire de formule (I) : 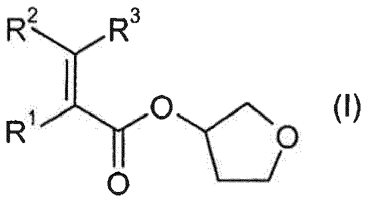 et au moins un générateur de radicaux,
dans lequel R¹ désigne H, CH₃, CH₂-CH₃ ou CH₂COOR⁴ ;
R² désigne H, CH₃, CH₂-CH₃, un phényle, CH=CH-CH₃, COOR⁴
ou CH₂COOR⁴ ;
R³ désigne H, CH₃, COOR⁴ ou CH₂COOR⁴ ;
avec R⁴ = H, un groupement alkyle, cycloalkyle,
phényle ou

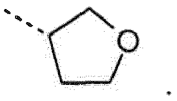

2. Composition à un ou plusieurs composants durcissable par voie radicalaire selon la revendication 1, **caractérisée en ce que** R²=R³=H et R¹ = H ou CH₃, en particulier CH₃.

3. Composition à un ou plusieurs composants durcissable par voie radicalaire selon l'une quelconque des revendications précédentes, **caractérisée en ce que** la composition contient en outre au moins un autre monomère M polymérisable par voie radicalaire.

4. Composition à un ou plusieurs composants durcissable par voie radicalaire selon l'une quelconque des revendications précédentes, **caractérisée en ce que** la composition contient en outre au moins un (méth)acrylate de métal.

5. Composition à un ou plusieurs composants durcissable par voie radicalaire selon l'une quelconque des revendications précédentes, **caractérisée en ce que** le générateur de radicaux est un peroxyde, un perester ou un hydroperoxyde.

6. Composition à un ou plusieurs composants durcissable par voie radicalaire selon la revendication 5, **caractérisée en ce que** la composition durcissable par voie radicalaire a deux composants et est constituée d'un premier composant K1 et d'un second composant K2,
dans laquelle le premier composant K1 contient au moins le monomère polymérisable par voie radiculaire de formule (I) et éventuellement l'amine tertiaire comme activateur ; et
dans laquelle le second composant K2 contient au moins le peroxyde, le perester ou l'hydroperoxyde comme générateur de radicaux.

7. Composition à un ou plusieurs composants durcissable par voie radicalaire selon l'une quelconque des revendications 1 à 4, **caractérisée en ce que** le générateur de radicaux est un photo-initiateur.

8. Composition à un ou plusieurs composants durcissable par voie radicalaire selon la revendication 7, **caractérisée en ce que** le photo-initiateur est choisi dans le groupe constitué des α-hydroxycétones, des phénylglyoxylates, des monoacylphosphines, des diacylphosphines, des oxydes phosphiniques et de leurs mélanges, en particulier dans le groupe constitué de la 1-hydroxy-cyclohexyl-phényl-cétone, de la benzophénone, de la 2-hydroxy-2-méthyl-1-phényl-propanone, du méthyl-phényl-glycoxylate, de l'ester 2-[2-oxo-2-phényl-acétoxy-éthoxy]éthylique de l'acide oxy-phényl-acétique, de l'ester 2-[2-hydroxy-éthoxy]éthylique de l'acide oxy-phényl-acétique, de l'oxyde diphényl(2,4,6-triméthyl-benzoyl)phosphinique, de l'oxyde phénylbis(2,4,6-triméthylbenzoyl)phosphinique et de leurs mélanges.

9. Composition à un ou plusieurs composants durcissable par voie radicalaire selon la revendication 8, **caractérisée en ce que** le photo-initiateur est une combinaison d'un oxyde bisacylphosphine et d'une α-hydroxycétone, en particulier d'un oxyde phénylbis(2,4,6-triméthyl-benzoyl)phosphinique et de 2-hydroxy-2-méthyl-1-phényl-propanone.

10. Composition à un ou plusieurs composants durcissable par voie radicalaire selon l'une quelconque des revendications 7 à 9, **caractérisée en ce que** la composition durcissable par voie radicalaire a un seul composant.

11. Utilisation d'une composition à un ou plusieurs composants durcissable par voie radicalaire selon l'une quelconque des revendications 1 à 10 comme adhésif ou matériau étanche.

12. Utilisation d'une composition à un ou plusieurs composants durcissable par voie radicalaire selon l'une quelconque des revendications 1 à 10 comme revêtement, en particulier comme laque, de préférence comme photolaque ou comme revêtement de sol.

13. Composition durcie **caractérisée en ce qu'**elle est obtenue à partir d'une composition à un ou plusieurs composants durcissable par voie radicalaire selon l'une quelconque des revendications 1 à 10 par un processus de durcissement.

14. Utilisation d'un monomère polymérisable par voie radicalaire de formule (I), comme décrit dans une composition à un ou plusieurs composants durcissable par voie radicalaire selon l'une quelconque des revendications 1 à 10, comme monomère pour des applications, en particulier comme adhésifs, qui présentent après durcissement du monomère une température de travail supérieure à 60 °C, en particulier supérieure à 80 °C.

15. Utilisation d'un monomère polymérisable par voie radicalaire de formule (I), comme décrit dans une composition à un ou plusieurs composants durcissable par voie radicalaire selon l'une quelconque des revendications 1 à 10, comme monomère pour des applications, en particulier comme revêtement de plancher ou photolaque, dans des espaces internes fermés ou à aération médiocre.
